# EUROPEAN PATENT APPLICATION

(11) **EP 2 218 689 A1**
(43) Date of publication of application: **18.08.2010**
(21) Application number: 08845051.5
(22) Date of filing: 27.10.2008
(51) Int. Cl.: C03B 5/225, C03B 5/20, C03B 18/16

(54) **PROCESS FOR PRODUCING FLOAT PLATE GLASS**

(30) Priority: 01.11.2007 JP 2007285024
(71) Applicant: Central Glass Company, Limited, Yamaguchi 755-0001 (JP)
(72) Inventor: KISHIMOTO, Kishijirou, Matsusaka-shi, Mie 515-0001 (JP); FURUKAWA, Shoji, Sakai-shi, Osaka 590-0987 (JP); NAKA, Akira, Sakai-shi, Osaka 590-0987 (JP); FUJII, Kenji, Ube-shi, Yamaguchi 755-0001 (JP)
(74) Representative: Manitz, Finsterwald & Partner GbR
(86) International application number: PCT/JP2008/069435
(87) International publication number: WO 2009/057547

(57) **Abstract**

In a process for producing a float plate glass having a plate thickness falling within a range from 0.1 mm to 2 mm, the process includes a step of draining a surface portion of a melted glass base material from an inside of a forming furnace or a glass-material melting furnace, in a region upstream from a location at which a width of glass ribbon is adjusted by top rolls.

## Description

### TECHNICAL FIELD

The present invention relates to a process for producing a float plate glass.

### BACKGROUND OF THE INVENTION

When floating a melted glass material on a molten metal in order to produce a float plate glass, the melted glass material is spontaneously broadened to have a steady-state thickness by means of an equilibrium between a gravity and a surface tension of the melted glass. This steady-state thickness is called "equilibrium thickness". This thickness varies according to a viscosity determined by a glass composition and a melting temperature, however, is normally approximately equal to 7 mm. The melted glass is drawn out in one direction in a shape of ribbon, and becomes a glass ribbon. In a case that a desired thickness is different from the equilibrium thickness, generally, the following process (method) is employed (for example, see Patent document 1). That is, width-directional both end portions of the glass ribbon are pressed by rolls configured to rotate. Each of these rolls is called "top roll", and is formed with a groove and a tooth. The glass ribbon is shortened by press in the width direction to become thicker, or is stretched in the width direction to become thinner, by these top rolls.

The glass ribbon floats on the molten metal bath. Hence, if a pressing force of the top roll, a direction of the top roll, an amount of the glass ribbon and the viscosity of the glass ribbon are controlled, any (arbitrary) thickness of the plate glass which is different from its equilibrium thickness should be able to be obtained in principal.

However, particularly in a case that a thin plate is produced; there are minute convexo-concaves (slight asperities) in a surface of manufactured plate glass as viewed locally, even if a thickness control for the plate glass as a whole is possible. As a reason for this, it is conceivable that an inconsistency of plate thickness directly forms the convexo-concaves (so-called uneven thickness), or that whole of the plate is in an undulate shape (rise-and-fall shape) with its plate thickness constant. However, in the case of minute convexo-concaves, the former reason is generally appropriate. It is conceivable that these minute convexo-concaves are caused when the glass ribbon is stretched (enlarged) in the width direction to be made thinner by the top rolls.

That is, although linear portions of the glass ribbon which have been pulled by the top rolls try to become thinner, a portion located between these linear portions tries to return to the equilibrium thickness and thereby tries to become thicker. Moreover, although the glass ribbon itself moves perpendicularly to the width direction, the top rolls do not move. Hence, the locations which are pulled by the top rolls are transferred from moment to moment, as viewed from the glass ribbon. That is, the glass receives these complicated stresses which vary with time. Thereby, particularly in the case of thin plate, it is not difficult to understand that a minute distortion is caused or that a plate-thickness inconsistency is caused due to this minute distortion.

An attempt to eliminate such an inconsistency of plate thickness has been done for a long time. For example, on an idea that a reason for the plate-thickness inconsistency is that the top rolls apply tensions only at discrete (separate) points, a previously-proposed technique is disclosed in which a tension is applied continuously along the end portions of glass ribbon instead of the top rolls (for example, see Patent Document 2).

Each of the end portions of glass ribbon given tensions by the top rolls has a roll mark, and cannot be used for a product. Despite this fact, a previously-proposed technique is disclosed in which a stress strain is relaxed to reduce the convexo-concaves (asperities) of glass surface by designing the end portion to have a thickness approximately equal to or slightly smaller than 3 mm which is thicker as compared with a glass ribbon's central portion having a thickness falling within a range from 0.1 mm to 1.5 mm and by designing a width of the end portion to be large (for example, see Patent Document 3).

These above-mentioned processes are for solving the problem which is caused by forcibly stretching a thick glass ribbon by use of the top rolls. As the other process, a previously-proposed technique is disclosed for obtaining an equally-thin glass ribbon by providing a weir (gate) in a region upstream from the top rolls in the forming furnace and thereby blocking the flow of a part of glass ribbon (for example, see Patent Documents 4 and 5).

If this plate-thickness inconsistency has been reduced to some extent, the plate-thickness inconsistency dose not cause major problems depending on its usage. For example, this reduced plate-thickness inconsistency causes no problems at all in a field of architectural window glass or automotive window glass, if a transmission image is not distorted to a human naked eye. However, in recent years, a quality demand for a usage for electronic engineering such as a PDP substrate, a liquid crystal substrate and a solar-cell substrate has become all the more severe, and hence it has become difficult to obtain a glass meeting this standard by using commonly-known techniques. Although a technique for polishing a glass surface by means of micro polishing in consideration of the existence of convexo-concaves in the glass surface is know, a cost for manufacturing a product is increased as a matter of course. Under such a situation, an easy process for obtaining a plate glass without the minute plate-thickness inconsistency has been required.

In addition to the improvement of plate-thickness inconsistency, in the case of usage for electronic engineering, a homogeneity in a thickness direction is also strongly required. In order to improve the homogeneity, it is important to prevent a mixing of foreign matter into the surface of glass (because the mixing of foreign matter often occurs in the glass surface) and also to prevent a difference in glass components between the surface of glass and an inner portion of glass.
Patent Document 1: Japanese Patent Publication No. S44 (1969)-23828
Patent Document 2: Japanese Patent Publication No. S49 (1974)-5206
Patent Document 3: Japanese Patent Application Publication No. H07(1995)-10569
Patent Document 4: Japanese Patent Publication No. S54 (1979)-31012
Patent Document 5: Japanese Patent Publication No. S59 (1984)-39377

### SUMMARY OF THE INVENTION

For example, the above-mentioned technique disclosed in Japanese Patent Publication No. S49 (1974)-5206 can reduce the plate-thickness inconsistency which causes the problem. However, it is difficult to consider that this technique can reduce the plate-thickness inconsistency sufficiently to satisfy the quality demand for the usage for electronic engineering or the like. This is because the tension is inevitably applied in a direction slightly inclined from the width direction toward the moving direction of glass ribbon but is not applied parallel to the width direction so that the tension does not stretch the glass ribbon equally, since the glass ribbon moves in the downstream direction (in consideration of this, general top rolls are slightly inclined). Moreover, in this technique, because various forces different from each other have to be applied from multiple points located on the continuous line, an actual control is difficult. Moreover, in a case that a device for applying such continuous forces is provided, a window for monitoring a floating state of the glass ribbon is blocked by this device so that the monitoring cannot be performed appropriately. Additionally, in this case, because a temperature near the both end portions of glass ribbon is lowered, there is a risk that the glass ribbon becomes easy to break within a slow-cooling furnace.

Moreover, the technique disclosed in Japanese Patent Application Publication No. H07(1995)-10569 tries to relieve the stress strain and solve the problem of minute convexo-concaves by designing the end portion of glass ribbon to have a thickness which is equal to or slightly smaller than 3 mm and which is thicker than a central portion of the glass ribbon and by designing a width of the end portion to be larger. However, because this end portion is not used as products, a portion available as products is reduced as the width of this end portion becomes larger. That is, there is a problem that a volume of products is more reduced as a better product tries to be obtained. Moreover, if the thickness of this end portion is greatly different from that of the central portion of glass ribbon, a thermal-capacity difference between the end portion and the central portion occurs as a matter of course. Thereby, the glass ribbon becomes easy to break within the slow-cooling furnace, and also, there is a risk that a heat strain near the end portion causes new convexo-concaves. Moreover, since this technique is for relieving the stress strain, this technique is considered effective to solve the undulate shape of whole of the plate glass which is caused due to the stress strain, but is not considered necessarily effective to solve the plate-thickness inconsistency (uneven thickness) which is caused due to a bias (unevenness) of material, among the above-mentioned reasons for the minute convexo-concaves in surface.

Moreover, in the technique disclosed in Japanese Patent Publication No. S54 (1979)-31012, there is a problem that a large swell occurs since the glass ribbon is forcibly blocked, even though the occurrence of such a swell is relatively rare in normal cases of thin plate. FIG. 4A is an enlarged view of a region near the weir disclosed in Japanese Patent Publication No. S54 (1979)-31012. This technique tries to obtain a thin ribbon on a molten metal 3 by blocking a glass ribbon 1 by use of the weir 41. A flow of the glass ribbon is complexly influenced by a pull stress of the top rolls which is applied from its downstream side and by a subtle variation of material input amount which is applied from its upstream side and the like. This is a reason for causing the swell of glass ribbon at a region downstream from the weir.

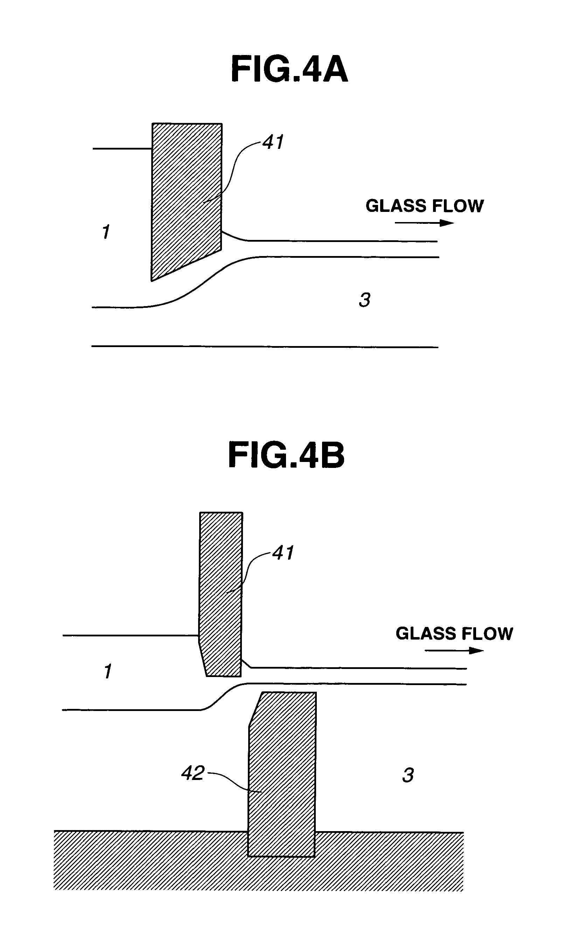

The technique disclosed in Japanese Patent Publication No. S59 (1984)-39377 provides another weir 42 on a side lower and downstream from the weir 41 in order to normalize this downstream flow, as shown in FIG. 4B. However, although the swell could be largely suppressed by this process, the suppression did not reach a satisfactory settlement.

Furthermore, even if this technique can produce a thin plate, this technique cannot solve the problem of homogeneity in the width direction which is recently an important problem to be solved. The mixing of foreign matter in the glass surface and the difference in components between the glass surface and the inner portion of glass might be solved by surface polishing. However, this incurs a high cost, and also it is difficult to polish a thin glass plate.

Thus, a process for easily obtaining a thin plate glass having a high homogeneity and no plate-thickness inconsistency which satisfies the recent quality demand has not been developed yet.

According to one aspect of the present invention, there is provided a process for producing a float plate glass having a plate thickness falling within a range from 0.1 mm to 2 mm, the process comprising a step of draining a surface portion of a melted glass base material from an inside of a glass-material melting furnace or a forming furnace, in a region upstream from a location at which a width of glass ribbon is adjusted by top rolls.

### BRIEF EXPLANATION OF DRAWINGS

[FIG. 1] A horizontal cross-sectional view of an apparatus for carrying out the present invention.
[FIG. 2] An enlarged cross-sectional view of a top roll.
[FIG. 3] A view showing a structure in which a glass base material is drained, according to the present invention.
[FIG. 4A] A view explaining a thickness adjusting means for glass ribbon in an earlier technology.
[FIG. 4B] A view explaining a thickness adjusting means for glass ribbon in an earlier technology.

### DETAILED DESCRIPTION OF THE INVENTION

According to the present invention, in a process for producing a float plate glass, a float plate glass having a reduced plate-thickness inconsistency or warpage and having a high homogeneity with a foreign matter reduced is obtained by draining a surface portion of a melted glass base material from an inside of a glass-material melting furnace or a forming furnace to an outside thereof, in a region upstream from a location at which a width of glass ribbon is adjusted by top rolls.

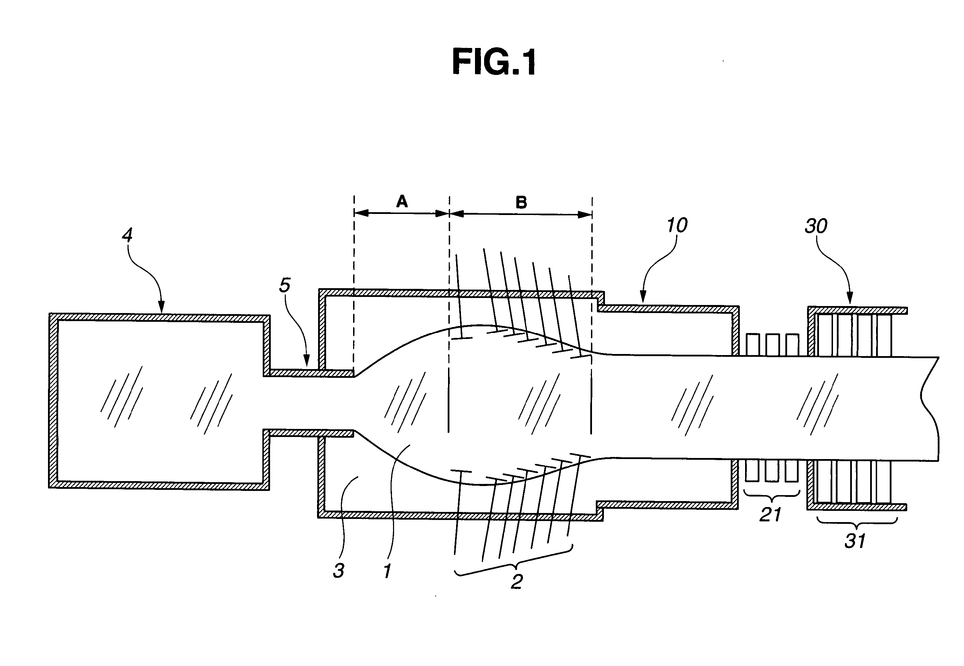

Referring to the drawings, a producing process according to the present invention will be explained below. FIG. 1 is a horizontal cross-sectional view of a float-glass producing apparatus for carrying out the present invention.

As shown in FIG. 1, a glass material is melted within a material melting furnace 4. Then, the melted glass material is supplied from a melted-material input port 5 into a forming melting furnace 10, and undergoes a shape forming under a melted state on a molten metal bath 3 within the forming melting furnace 10. The melted glass generates a glass bank having a thickness near its equilibrium thickness, in a high-temperature region A. Thereby, a glass ribbon 1 is formed. By means of lift-out rolls 21 and slow-cooling-furnace rolls 31 provided within a slow-cooling furnace 30, the glass ribbon 1 moves in a direction toward the slow-cooling furnace 30 (in a right direction of FIG. 1), and is transferred into a region B having a temperature somewhat lower than the region A. Top rolls 2 are arranged in this region B, i.e., this region B is an existence zone of the top rolls 2. The number of top rolls 2, an arrangement direction of each top roll 2, a pressure at which each top roll 2 presses the glass ribbon, and a speed of each top roll 2 can be varied respectively. In a case that a glass ribbon thinner than the equilibrium thickness is produced, a rotation axis of each of the paired top rolls is somewhat inclined toward a movement direction of the glass ribbon 1 in order to stretch (draw and enlarge) the glass ribbon.

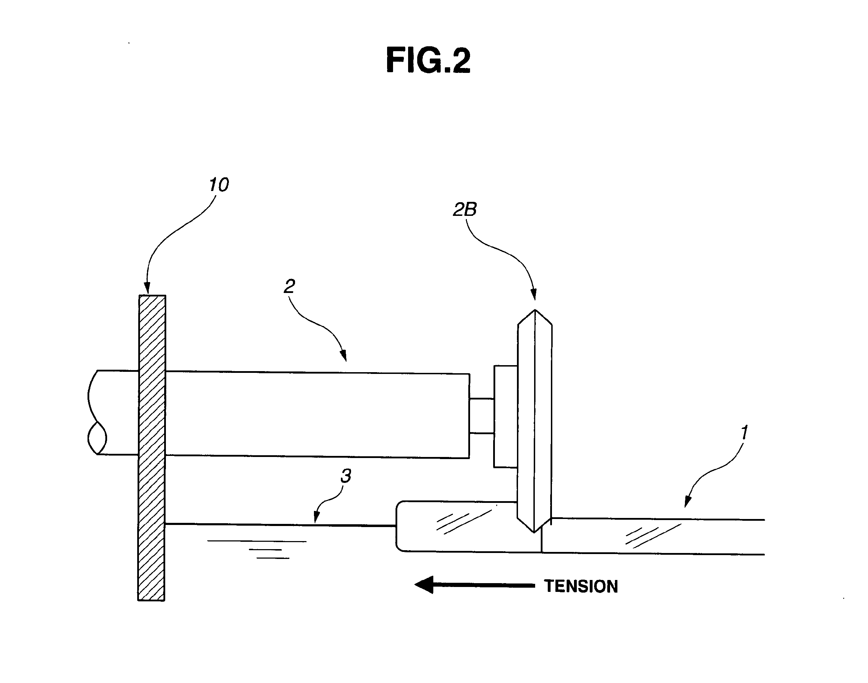

As shown in FIG. 2, a tooth portion 2B of each top roll 2 presses an end portion of the glass ribbon 1. Thereby, a tension is applied to the glass ribbon 1 in a width direction of glass ribbon 1, so that a contraction amplitude of the glass ribbon 1 is suppressed. Thus, each top roll 2 adjusts a thickness of the glass ribbon 1.

While the glass ribbon 1 passes through the region B, at first, this glass ribbon 1 is stretched in the width direction by the top rolls located on an upstream side in the region B. Then, while the glass ribbon 1 passes through the region B, the glass ribbon 1 is gradually made to contract by the top rolls located on a downstream side in the region B to cause a center portion of the glass ribbon 1 to have a desired thickness. Thus, the shape of glass ribbon 1 is formed.

As mentioned above, if excessive stretching of these top rolls 2 occurs, minute convexo-concaves (slight asperities) of the glass are caused.

As a countermeasure, a method in which the material is reduced so as not to need the excessive stretching is easily conceivable. However, as an issue of the apparatus, there is a difficulty in uniformly melting the material unless a material amount greater than a certain level is charged. Moreover, it is conceivable that the melting furnace is replaced with the other furnace for the desired thickness of glass. However, the one-by-one replacement of the apparatus in dependence upon the desired thickness of glass is not realistic.

Moreover, it is conceivable that the movement speed of the glass ribbon 1 is increased while maintaining the amount of material. However, since the movement speed of glass ribbon 1 is determined by the lift-out rolls 21 and the slow-cooling-furnace rolls 31 provided in the slow-cooling furnace 30, the increase of movement speed beyond its proper limit causes a result same as the case of excessive stretching. If the movement speed is increased too much, the glass ribbon existing under high temperature is transferred into the slow-cooling furnace, resulting in a reason for heat strain.

Moreover, it is noted that, in these methods (countermeasures), the problem of nonhomogeneity of glass components and the problem of foreign matter (extraneous substances) included in glass surface cannot be solved. The foreign matter included in the glass surface is mainly composed of a fallen object which has fallen from a ceiling of the material melting furnace in the material melting furnace, i.e., an object which has evaporated from the glass material and has solidified on the ceiling. This fallen object is melted again in an upstream region of the melting furnace. However, in a downstream region of the melting furnace, this fallen object cannot be melted and remains as is. A main reason for the nonhomogeneity is a difference between vapor pressures of material components. In a case of commonly-used borosilicate glass, a surface of the borosilicate glass tends to contain a lot of boron which is easy to evaporate.

Therefore, according to the present invention, a surface portion of the melted glass base material is removed in a region upstream from a glass forming section in order to prevent the minute convexo-concaves of thin plate glass and also to concurrently solve the problem of nonhomogeneity and the problem of foreign matter contained in glass surface. That is, only an upper-layer portion of the melted glass is drained laterally from the furnace.

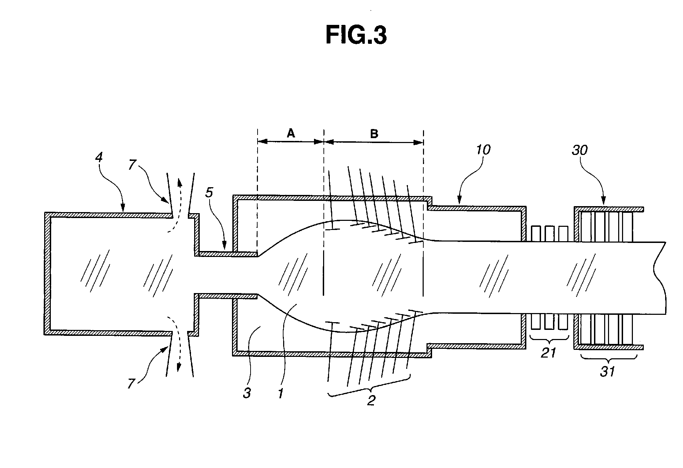

FIG. 3 is a view showing a float-glass producing apparatus in which a part of the glass base material is drained from both lateral portions of most downstream portion of the material melting furnace. By adjusting a height of a drain port 7 and the amount of glass material, a constant amount of glass material can be drained (made to flow out).

Moreover, as a place where the glass base material is drained, anyplace upstream from (upstream beyond) the forming section for glass ribbon 1 may be employed. However, the most downstream portion of the material melting furnace is most preferable. This is for the following reasons. That is, in a case that the place for draining the glass base material is located inside the forming melting furnace; a viscosity of the glass base material is too high so that the drain of glass base material becomes difficult, and there is a risk that a drain flow affects the forming of glass ribbon 1. On the other hand, in a case that the place for draining the glass base material is located in an upstream region of the material melting furnace in the material melting furnace, there is a possibility that the mixing of foreign matter (substances) and/or the nonhomogeneity are caused after the glass base material has passed through this upstream region of material melting furnace.

Since the removed (drained) glass base material can be used again as the glass material, nothing is wasted. The foreign matter and the non-homogeneous portions are completely melted in the upstream high-temperature region of material melting furnace, and hence can be used again with no problem. Rather, there is an advantage that the foreign matter and the non-homogeneous portions are easy to melt, because these of foreign matter and non-homogeneous portions have been melted once to dissolve and mix respective material components with one another.

### FIRST EMBODIMENTNT

An embodiment according to the present invention will now be explained.

A thin plate glass was produced by using the float-glass producing apparatus which was constructed to cause a total width of ribbon to become approximately equal to 4m after cooling, as shown in FIG. 1. A glass composition in this embodiment is a general-purpose soda lime composition which is used for architectural windows or some of liquid crystal substrates. The glass composition in this embodiment is represented by SiO₂: 71%, Al₂O₃: 2%, CaO: 9%, MgO: 4%, Na₂O: 13%, and K₂O: 1%, in weight percent.

At first, it was confirmed that a normal glass plate having a thickness falling within a range from 2.0 to 2.5 mm can be obtained by using a method without the drain port (flow-out port) on the following conditions. That is, an input (charge) amount of glass material is equal to 250000 Kg/day (250000 Kg per day), a material melting temperature is equal to 1120 °C, an input (charge) temperature of the forming melting furnace is equal to 1000 °C, an exit temperature of the forming melting furnace is equal to 600 °C, and a speed of the lift-out roll is equal to 11.9 m/min. Afterward, 100000 Kg/day of the glass base material was drained (made to flow out), from the surface of glass base material, through a glass-base-material drain port formed in a most downstream portion of the material melting furnace.

In this embodiment, it was necessary to adjust a temperature within the forming furnace because the temperature within the forming furnace is lowered according to the reduction of glass base material. Also, it was necessary to adjust the top rolls because the thickness of glass ribbon was changed. However, in this embodiment, the glass ribbon could be broadened spontaneously without varying the pressure of the top rolls against the glass ribbon, and a thin plate glass having a thickness equal to 0.7 mm could be obtained which has an area (planar dimension) same as the case of thickness ranging from 2.0 mm to 2.5 mm.

The obtained thin plate glass was a glass having no minute convexo-concaves and no swell. It was confirmed that this thin plate glass can be applied also to an electronic substrate or the like with no problem.

### (Advantageous Effects)

According to the present invention; a float plate glass can be produced which has extremely low inconsistencies in plate thickness, no foreign matter and an extremely high homogeneity, as desired by the application to electronic engineering such as a PDP substrate, a liquid crystal substrate and a solar-cell substrate. Moreover, the float plate glass can be manufactured so as to enhance a product quality and a yield under a stable manufacturing, without greatly changing an operating condition for actual furnaces and a plate producing condition in the float method, and without requiring a new facility.

### INDUSTRIAL APPLICABILITY

It is a matter of course that the present invention is applicable to the commonly-known plate-glass field such as an architectural window glass or an automotive window glass. In addition, particularly, the present invention is applicable also to an electronic material field requiring the smoothness and homogeneity of glass surface, for example, is applicable to the PDP substrate, the liquid crystal substrate and the solar cell substrate.

## Claims

1. A process for producing a float plate glass having a plate thickness falling within a range from 0.1 mm to 2 mm, the process comprising
draining a surface portion of a melted glass base material from an inside of a glass-material melting furnace or a glass-material melting forming furnace to an outside of the glass-material melting furnace or the glass-material melting forming furnace, in a region upstream from a location at which a width of glass ribbon is adjusted by top rolls.

2. The process as claimed in Claim 1, wherein
the surface portion of the glass base material is removed so as to obtain a plate glass having a minute surface foreign matter and a high homogeneity in material components.
